(19) Europäisches Patentamt
European Patent Office
Office européen des brevets

(11) Veröffentlichungsnummer: **0 328 488 A1**

# (12) EUROPÄISCHE PATENTANMELDUNG

(21) Anmeldenummer: **89810095.3**

(22) Anmeldetag: **03.02.89**

(51) Int. Cl.[4]: **C 10 M 137/10**
C 10 M 141/10, C 07 F 9/165
//(C10M141/10,135:20,137:10),
C10N30:06

(30) Priorität: **12.02.88 CH 516/88**

(43) Veröffentlichungstag der Anmeldung:
**16.08.89 Patentblatt 89/33**

(84) Benannte Vertragsstaaten: **DE FR GB IT**

(71) Anmelder: **CIBA-GEIGY AG**
**Klybeckstrasse 141**
**CH-4002 Basel (CH)**

(72) Erfinder: **Dubas, Henri, Dr.**
**Rte de Pfaffenwil 23**
**CH-1723 Marly (CH)**

## (54) Asymmetrische Disulfide in Schmierstoffzusammensetzungen.

(57) Schmierstoffzusammensetzungen oder Hydraulikflüssigkeitszusammensetzungen enthaltend
a) mindestens einen Schmierstoff oder eine Hydraulikflüssigkeit und
b) mindestens eine Verbindung der Formel

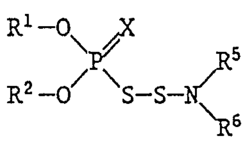

(I),

worin
$R^1$ und $R^2$ gleich oder verschieden sind und jeweils eine Alkylgruppe mit 1 bis 30 C-Atomen, eine unsubstituierte oder $C_1$-$C_8$ alkylsubstituierte Cycloalkylgruppe mit 5 bis 12 C-Atomen oder eine unsubstituierte oder $C_1$-$C_{12}$ alkylsubstituierte $C_6$-$C_{10}$-Arylgruppe darstellen oder $R^1$ und $R^2$ zusammen eine unsubstituierte oder $C_1$-$C_{12}$ alkylsubstituierte Alkylengruppe mit 2 bis 20 C-Atomen oder eine Arylengruppe mit 6 bis 20 C-Atomen darstellen und
$R^5$ und $R^6$ gleich oder verschieden sind und jeweils eine Alkylgruppe mit 1 bis 30 C-Atomen oder
$R^5$ und $R^6$ zusammen eine unsubstituierte oder $C_1$-$C_{12}$ alkylsubstituierte Alkylengruppe mit 2 bis 20 C-Atomen, eine durch -O-, -S- oder -$NR^9$-, wobei $R^9$ H oder $C_1$-$C_4$-Alkyl bedeutet, unterbrochene Alkylengruppe mit 2 bis 10 C-Atomen und
X = O oder S darstellen.

EP 0 328 488 A1

## Beschreibung

### Asymmetrische Disulfide in Schmierstoffzusammensetzungen

Die Erfindung betrifft Zusammensetzungen enthaltend asymmetrische Disulfide, sowie neue asymmetrische Disulfide und neue Herstellungsverfahren, sowie die Verwendung der asymmetrischen Disulfide in Schmierstoffzusammensetzungen oder Hydraulikflüssigkeitszusammensetzungen.

Mineralölen und synthetischen oder halbsynthetischen Schmierstoffen und auch Hydraulikflüssigkeiten werden im allgemeinen verschiedene Zusatzstoffe zur Verbesserung ihrer Gebrauchseigenschaften beigegeben. Insbesondere besteht ein Bedarf an Additiven, welche die zu schmierenden Vorrichtungen vor Reibungsabnutzung schützen sollen. An solche Verschleissinhibitoren wird die Anforderung gestellt, dass sie das Lasttragevermögen des Schmierstoffs erhöhen und nicht korrodierend auf die zu schützenden Metallteile wirken.

So werden heute verschiedene Phosphorverbindungen als Hochdruck-und Verschleissschutzadditive eingesetzt, insbesondere Verbindungen aus der Reihe der Zinkdialkyldithiophosphate. Im Zusammenhang mit der Wirksamkeit der Abgasreinigungskatalysatoren in den Abgassystemen von Benzinmotoren sind metall- und besonders zinkhaltige Verbindungen im Motorenöl unerwünscht, da deren Bestandteile, die allenfalls in den Katalysator gelangen, diesen in seiner Wirksamkeit beeinträchtigen. Derartige zinkfreie Additive wurden beispielsweise schon in der EP-A 0 166 696 beschrieben.

Aus der DE-A 20 31 505 wurden weiters Schmierölzubereitungen bekannt, die als Additiv eine Mischung aus Phosphorthionyl- oder Phosphorsulfid und Ammoniumthiophosphat enthalten.

Aus der EP-A 0 076 784 ist die Verwendung von 2 N-Atome enthaltenden Polysulfiden als Schmiermittel-Additive bekannt.

Die Hochdruck- und Verschleiss-Schutz-Eigenschaften von solche Additive enthaltenden Schmiermitteln sind vielfach nicht zufriedenstellend. Insbesondere kann die thermische Stabilität ungenügend sein und es kann Korrosion an Kupfer und Eisen eintreten.

Bekannt geworden aus B.A. Khaskin, N.A. Tolmacheva und V.K. Promonenkov, Zhurnal Obshchei Khimii, Vol 50, No. 12, pp. 2700-2703, December 1980, sind ferner einige Alkylaminodialkoxyphosphinothionyldisulfide.

Es wurden nun Zusammensetzungen und Verbindungen gefunden, die eine sehr gute Hochdruck-und Verschleisschutzwirkung aufweisen, die eine verminderte Korrosivität auch gegenüber von Kupfer zeigen und die kein Zink enthalten.

Die erfindungsgemässen Schmierstoffzusammensetzungen oder Hydraulikflüssigkeitszusammensetzungen enthalten

a) mindestens einen Schmierstoff oder eine Hydraulikfüssigkeit und

b) mindestens eine Verbindung der Formel

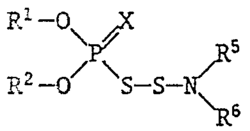

(I),

worin

$R^1$ und $R^2$ gleich oder verschieden sind und jeweils eine Alkylgruppe mit 1 bis 30 C-Atomen, eine unsubstituierte oder $C_1$-$C_8$ alkylsubstituierte Cycloalkylgruppe mit 5 bis 12 C-Atomen oder eine unsubstituierte oder $C_1$-$C_{12}$ alkylsubstituierte $C_6$-$C_{10}$-Arylgruppe darstellen oder $R^1$ und $R^2$ zusammen eine Alkylengruppe mit 2 bis 20 C-Atomen oder eine Arylengruppe mit 6 bis 20 C-Atomen darstellen und

$R^5$ und $R^6$ gleich oder verschieden sind und jeweils eine Alkylgruppe mit 1 bis 30 C-Atomen oder $R^5$ und $R^6$ zusammen eine unsubstituierte oder $C_1$-$C_{12}$ alkylsubstituierte Alkylengruppe mit 2 bis 10 C-Atomen oder eine durch -O-, -S- oder -$NR^9$-, wobei $R^9$ H oder $C_1$-$C_4$-Alkyl bedeutet, unterbrochene Alkylengruppe mit 2 bis 10 C-Atomen und

X = O oder S darstellen.

Die Verbindungen der Formel (I) können dem Schmierstoff oder der Hydraulikflüssigkeit als solche zugesetzt werden. Sie können aber auch in diesem in situ erzeugt werden. Daher sind besonders zu erwähnen Schmierstoffzusammensetzungen oder Hydraulikflüssigkeitszusammensetzungen enthaltend eine Verbindung der Formel (I), gebildet in situ im Schmierstoff oder in der Hydraulikflüssigkeit als Umsetzungsprodukt aus wenigstens einer Verbindung der Formel

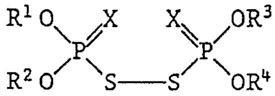

(II),

wobei $R^1$ und $R^2$ die oben angegebene Bedeutung haben und $R^3$ und $R^4$ gleich oder verschieden sind und die für $R^1$ oder $R^2$ oben angegebene Bedeutung haben oder $R^3$ und $R^4$ zusammen die für $R^1$ und $R^2$ zusammen angegebene Bedeutung haben, und wenigstens einer Verbindung der Formel

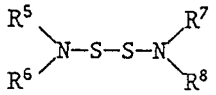

(III),

wobei $R^5$ und $R^6$ die oben angegebene Bedeutung haben und $R^7$ und $R^8$ gleich oder verschieden sind und die für $R^5$ oder $R^6$ oben angegebene Bedeutung haben oder $R^7$ und $R^8$ zusammen die für $R^5$ und $R^6$ zusammen oben angegebene Bedeutung haben.

Als zweckmässig haben sich Verbindungen der Formel (II) in denen jeweils $R^1$ mit $R^2$ und $R^3$ mit $R^4$ identisch sind, erwiesen. Zweckmässig sind Verbindungen der Formel (III), in denen jeweils $R^5$ mit $R^6$ und $R^7$ mit $R^8$ identisch sind. Besonders zweckmässig sind Verbindungen der Formel (II), in denen jeweils alle vier Substituenten gleich sind, wobei $R^1$, $R^2$, $R^3$ and $R^4$, die angegebene Bedeutung haben. Als besonders zweckmässig haben sich auch Verbindungen der Formel III erwiesen, in denen jeweils alle vier Substituenten gleich sind und $R^5$, $R^6$, $R^7$ und $R^8$ die angegebene Bedeutung haben.

Somit können beispielsweise die Substituenten $R^1$ bis $R^8$ unabhängig voneinander eine geradkettige oder verzweigte Alkylgruppe, zweckmässig mit 1-30 Kohlenstoffatomen, darstellen.

Beispiele hierfür sind Methyl, Ethyl, n-Propyl, Isopropyl, n-Butyl, sec.-Butyl, t-Butyl, Isoamyl, n-Hexyl, 2-Ethylbutyl, Pentyl, 1-Methylpentyl, 1,3-Dimethylbutyl, 1,1,3,3-Tetramethylbutyl, 1-Methylhexyl, Isoheptyl, n-Octyl, 2-Ethylhexyl, 1-Methylheptyl, 1,1,3,-Trimethylhexyl, n-Decyl, 1-Methylundecyl oder n-Dodecyl, Tetradecyl, Hexadecyl, Octadecyl oder Eicosyl. Bevorzugt wird 2-Ethylhexyl, wobei 2-Ethylhexyl für $R^5$ und $R^6$ von grossem praktischem Interesse ist.

Als unsubstituierte oder $C_1$-$C_8$ alkylsubstituierte Cycloalkylgruppe mit 5-12 C-Atomen findet beispielsweise Cyclopentyl, Cyclohexyl, 2-Methylcyclohexyl, 4-Methylcyclohexyl, Dimethylcyclohexyl, Trimethylcyclohexyl, t-Butylcyclohexyl, Cycloheptyl, Cyclooctyl und Cyclododecyl für die Substituenten $R^1$ bis $R^4$ Anwendung. Bevorzugt ist die Cyclohexylgruppe.

Bedeuten $R^1$ bis $R^4$ eine unsubstituierte oder $C_1$-$C_{12}$ alkylsubstituierte $C_6$-$C_{10}$-Arylgruppe, so kann das beispielsweise Phenyl, Methylphenyl, Dimethylphenyl, Trimethylphenyl, Ethylphenyl, Diethylphenyl, Isopropylphenyl, tert-Butylphenyl, Di-tert-butylphenyl oder 2,6-Di-tert-butyl-4-methylphenyl sein. Bevorzugt ist die Phenylgruppe.

$R^1$ und $R^2$ zusammen und/oder $R^3$ und $R^4$ zusammen, sowie $R^5$ und $R^6$ zusammen und/oder $R^7$ und $R^8$ zusammen, können für eine Alkylengruppe mit 2 bis 20 C-Atomen, resp. 2-10 C-Atomen, die gegebenenfalls mit Alkyl mit insgesamt 1 bis 12 C-Atomen substituiert ist, stehen. Beispiele dafür sind Ethylen, Propylen, Trimethylen, Tetramethylen, Pentamethylen, Hexamethylen, Octamethylen, Decamethylen oder Dodecamethylen, weiters 2-Methyl-2-n-propyltrimethylen, 2-Methyl-2-n-butyl-trimethylen, 1,1-Dimethyl-2,2-dimethyldimethylen, 1,1,2-Trimethyl-2-n-propyltrimethylen, 2-Ethyl-2n-butyltrimethylen, 1-iso-Propyl-2,2-dimethyltrimethylen, 1-Methyltrimethylen, 2,2-Dimethyltrimethylen, 1,1,3-Trimethyltrimethylen und 2,2,4- oder 2,4,4-Trimethylhexamethylen. Von Bedeutung sind insbesondere die Trimethylene und dabei das 2-Methyl-2-n-propyl-, 2-Methyl-2-n-butyltrimethylen oder 1-iso-Propyl-2,2-dimethyltrimethylen für die Bedeutung von $R^1$ und $R^2$ zusammen.

$R^1$ und $R^2$ zusammen und/oder $R^3$ und $R^4$ zusammen, als Arylen mit 6 bis 20 C-Atomen, können z.B. 1,2-Phenylen, 1,3-Phenylen oder 1,4-Phenylen sein.

$R^5$ und $R^6$ zusammen und/oder $R^7$ und $R^8$ zusammen können jeweils eine durch -O-, -S- oder -$NR^9$-, wobei $R^9$ H oder $C_1$-$C_4$-Alkyl bedeutet, unterbrochene Alkylengruppe mit 2 bis 10 C-Atomen bilden. Bevorzugt sind die Gruppen der Formeln $-(CH_2)_2-O-(CH_2)_2-$ und

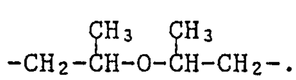

Von grossem praktischem Interesse sind auch Verbindungen in denen $R^5$ und $R^6$ zusammen mit dem sie verknüpfenden N-Atom eine Morpholinogruppe darstellen.

Bevorzugt werden Verbindungen der Formeln (I) und (II) in denen die Substituenten $R^1$ und $R^2$ gleich sind und je eine Alkylgruppe mit 5 bis 12 C-Atomen, Phenyl, eine $C_1$-$C_8$ alkylsubstituierte Phenylgruppe oder eine unsubstituierte oder $C_1$-$C_4$ alkylsubstituierte Cycloalkylgruppe mit 6-8 C-Atomen bedeuten oder $R^1$ und $R^2$ zusammen eine verzweigte Alkylengruppe mit 4-9 C-Atomen bedeutet.

Zu den weiteren bevorzugten Verbindungen der Formeln (I) und (III) gehören solche, in denen die Substituenten $R^5$ und $R^6$ gleich sind und vorzugsweise eine Alkylgruppe mit 5-12 C-Atomen oder $R^5$ und $R^6$ zusammen eine Alkylengruppe mit 4 bis 6 C-Atomen oder eine durch -O- unterbrochene Alkylengruppe mit 4 bis 6 C-Atomen und vorzugsweise $-(CH_2)_2-O-(CH_2)_2-$ oder

$-(CH_2)_2-O-(CH_2)_2-$ oder 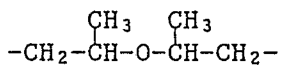

darstellen.

Weiters zählt zu den bevorzugten Ausführungsformen Verbindungen der Formel I und II in denen X = S bedeutet.

Die erfindungsgemässen Verbindungen der Formel I können nach verschiedenen, an sich bekannten Verfahren für asymmetrische Disulfide hergestellt werden.

Ein an sich geeignetes Herstellungsverfahren lässt sich der genannten Literaturstelle B.A. Kashin, N.A. Tolmacheva und V.K. Promonenkov, Zhurnal Obshchei Khimii, Vol. 50, No. 12, pp. 2700-2703, December 1980, entnehmen. Dieses Verfahren folgt der unten allgemeinen angeführten Reaktionsgleichung:

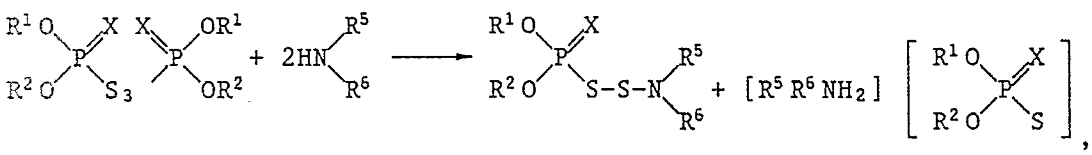

wobei im hier vorliegenden Fall $R^1$, $R^2$, $R^5$, $R^6$ und X die oben angegebene Bedeutung haben können.

Ein anderes geeignetes Herstellungsverfahren ist die Halogenierung und insbesondere Bromierung eines sekundären Diaminodisulfides und anschliessende Umsetzung des in situ generierten Amidosulfenylhalogenids, resp. Amidosulfenylbromids, mit einem Alkalimetalldithiophosphat.

Die Verbindungen der Formel I können beispielsweise auch durch Umsetzung von Verbindungen der Formel II und III, wobei die Formeln II und III obengenannte Bedeutung haben, hergestellt werden. Das Verfahren kann in einem Lösungsmittel, beispielsweise Toluol, durch Kochen am Rückfluss, bei ca. 110°C, während etwa 10 bis 20 Stunden, ausgeführt werden. Anschliessend kann das Lösungsmittel entfernt und das Reaktionsgemisch als solches weiterverwendet werden. Die Verbindungen der Formel I können auch aus dem Reaktionsgemisch isoliert und dann weiterverwendet werden.

Die Zusammensetzungen nach vorliegender Erfindung können demzufolge durch Mischen der Verbindungen der Formel (II) und der Formel (III) und Zumischen des Reaktionsgemisches oder der aus dem Reaktionsgemisch isolierten Verbindungen der Formel I zu einem Schmierstoff oder einer Hydraulikflüssigkeit hergestellt werden.

Die erfindungsgemässe Schmierstoffzusammensetzung oder Hydraulikflüssigkeitszusammensetzung kann durch Zugabe einer wirksamen Menge, zweckmässig von 0,01 bis 10 Gew.-%, bevorzugt von 0,1 bis 5 und ganz besonders bevorzugt von 0,5 bis 2 Gew.-%, bezogen auf die Zusammensetzung, einer oder mehrerer Verbindungen der Formel (I) zu einem Schmierstoff, beziehungsweise zu einer Hydraulikflüssigkeit, erhalten werden.

Gegenstand vorliegender Erfindung ist auch ein Verfahren zur Herstellung einer Schmierstoffzusammensetzung oder Hydraulikflüssigkeitszusammensetzung, enthaltend wenigstens eine Verbindung der Formel (I), indem man dem Schmierstoff oder der Hydraulikfüssigkeit mindestens eine Verbindung der Formel (II) und mindestens eine Verbindung der Formel (III) zugibt und alle Komponenten mischt, wobei zweckmässig die Verbindungen der Formel (II) und der Formel (III) in einer Konzentration von zusammen 0,01 bis 10 Gew.-%, bezogen auf die Zusammensetzung, zugemischt werden.

Die Verbindungen nach Formel (II) und (III) können in einer äquimolaren Menge oder auch in etwas vom streng rechnerischen äquimolaren Verhältnis abweichender Menge angewendet, d.h. zusammengemischt werden. Darüberhinaus kann auf eine äquimolare Mischung abgezielt werden und zusätzlich können, um weitere gewünschte Eigenschaften des Endproduktes zu erreichen oder zu verstärken, bestimmte Mengen entweder der Verbindung der Formel (II) oder der Verbindung der Formel (III), also in einem rechnerischen Ueberschuss, zugegeben werden.

Zu den erfindungsgemässen Schmierstoffzusammensetzungen oder Hydraulikflüssigkeitszusammensetzungen gehören deshalb auch solche, enthaltend die Verbindungen der Formel (I) und die verbleibenden Verbindungen der Formeln (II) und/oder (III), wenn die Verbindungen der Formel (II) und (III) im molaren Mischungsverhältnisse von beispielsweise 3:1 bis 1:3, zweckmässig von 3:2 bis 2:3 und bevorzugt von 5:4 bis 4:5 angewendet werden.

Die Erfindung kann demnach auch Schmierstoffzusammensetzungen oder Hydraulikflüssigkeitszusammensetzungen umfassen, die neben Verbindungen der Formel (I) noch Verbindungen der Formel (II) und/oder (III) enthalten.

Allen Herstellungsverfahren, die von Verbindungen der Formel (II) und (III) ausgehen, ist gemeinsam, dass die Mischungen der Verbindungen mit der Formel (II) und der Formel (III) oder der Schmierstoff oder die Hydraulikflüssigkeit enthaltend die Verbindungen der Formeln (II) und (III) zweckmässig einer Temperatur von 25 bis 150°C, bevorzugt von 60 bis 120°C und ganz besonders bevorzugt von 100 bis 120°C ausgesetzt werden, damit die Verbindungen der Formel (I) in möglichst hoher Ausbeute gebildet werden.

Zur Herstellung einer Schmierstoffzusammensetzung oder Hydraulikflüssigkeitszusammensetzung enthaltend eine Verbindung der Formel (I) wird ein Verfahren bevorzugt, das gekennzeichnet ist durch Mischen einer äquimolaren Menge einer Verbindung der Formel

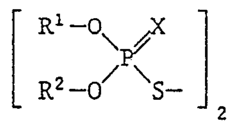

(IV),

wobei $R^1$, $R^2$ und X die oben angegebene Bedeutung haben mit einer Verbindung der Formel

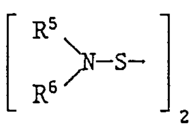

(V),

wobei $R^5$ und $R^6$ die oben angegebene Bedeutung haben.

Die Verbindungen der Formel (II) und somit der Formel (IV) sind bekannt und zum Beispiel über die Oxidation von Dialkyldithiophosphorsäure mit Natriumhypochlorit zugänglich (US-A 3 885 001). Die Verbindungen der Formel (III) und somit der Formel (V) sind ebenfalls bekannt und werden durch Umsetzung von Dialkylaminen mit Dischwefeldichlorid in Gegenwart von Natriumhydroxid erhalten (EP-A 76 784). Ein weiteres Herstellungsverfahren für Verbindungen der Formel (III) ist beispielsweise aus der DE-B 2 031 505 bekannt.

Die erfindungsgemässen Verbindungen der Formel (I) sind von flüssiger oder viskoser bis fester Konsistenz. Sie sind in unpolaren organischen Substanzen (z.B. in Schmierölen) sehr gut löslich.

Ein vorteilhaftes Herstellungsverfahren besteht darin, dass man die Verbindungen der Formeln (II) und (III) einem Schmierstoff oder einer Hydraulikflüssigkeit in solchen Mengen zumischt, dass die Verbindungen der Formel (I) und allfällige Ueberschüsse von Verbindungen der Formel (II) oder (III) zusammen 0,01 bis 99 Gew.-% und vorzugsweise 10 bis 50 Gew.-%, bezogen auf den Schmierstoff oder die Hydraulikflüssigkeit, betragen.

Solche Gemische können dann direkt weiterverwendet werden oder können Konzentrate darstellen, die kurz vor dem Gebrauch einem zu verbessernden Schmierstoff oder einer zu verbessernden Hydraulikflüssigkeit in den gewünschten Mengen zugesetzt werden. Dabei soll die Verdünnung der erfindungsgemässen Zusätze die Konzentration, die für eine Wirksamkeit notwendig ist, nicht unterschreiten, d.h. vorzugsweise soll die Verbindung der Formel (I) oder die Summe der Verbindungen der Formeln (I), (II) und (III) in erfindungsgemässen Zusammensetzungen wenigstens 0,01 Gew-% des verbrauchsfertigen Schmierstoffes oder der Hydraulikflüssigkeit betragen. Im Regelfalle soll schliesslich der verbrauchsfertige Schmierstoff oder die Hydraulikflüssigkeit die Verbindungen der Formeln (II) und/oder (III) und die daraus gebildeten Verbindungen der Formel (I) zusammen in Mengen von 0,01 bis 10 Gew.-%, zweckmässig 0,1 bis 5 Gew.-% und vorzugsweise 0,5 bis 2 Gew.-% enthalten.

Die Verbindungen der Formel (I), gegebenenfalls im Gemisch mit Verbindungen der Formeln (II) und/oder (III), dienen beispielsweise als Zusätze für Schmierstoffe, beispielsweise für Motorenöle. Der Schmierstoff kann ein Oel oder Fett, basierend auf einem Mineralöl oder synthetischen Oel oder Mischungen davon, sein. Mitumfasst werden Mineralöle die für Schmierzwecke eingesetzt werden und auf Kohlenwasserstoffverbindungen basieren, dann synthetische Oele aus der Reihe der aliphatischen oder aromatischen Carboxylester, der polymeren Ester, der Polyalkylenoxide, der Phosphorsäureester, der Poly-α-olefine oder der Silicone. Fette können erhalten werden durch diese Oele in Mischung mit Metallseifen oder gleichwertigen Verdickern.

Solche Verbindungen sind umfassend beschrieben in: "Schmiermittel Taschenbuch" (Hüthig Verlag, Heidelberg, 1974), "Ullmanns Encyclopädie der technischen Chemie", Bd. 13, Seiten 85-94 (Verlag Chemie, Weinheim, 1977) und D. Klamann, "Schmierstoffe und verwandte Produkte", Seiten 158-174 (Verlag Chemie, Weinheim, 1982).

Die neuen Schmierstoffzusammensetzungen weisen in Schmiersystemen Hochdruck- und Antiverschleisswirkung und korrosionsinhibierende Wirkung auf. Ein besonderer Vorteil der Verbindungen der Formel (I) ist, dass sie im Gegensatz zu Verbindungen mit ähnlichen Eigenschaften Zink-und Zinn- und damit Asche-frei sind, wodurch dann auch die Nachverbrennung der Abgase in katalysierten Systemen nicht beeinträchtigt wird. Zudem sind die Verbindungen arm an Phosphor und damit weniger anfällig auf das Wachstum von Mikroorganismen darin. Schliesslich fällt bei der Entsorgung der Stoffe weniger Phosphat an, was zur Vermeidung der bekannten Umweltprobleme beiträgt.

Besonders zu erwähnen ist die Verminderung der Korrosion von Kupfer. Es wurde insbesondere gefunden, dass sich die gewünschten Hochdruck-und Verschleisseigenschaften beider Molekülteile im asymmetrischen Produkt der Formel (I) unerwartet und überraschend gut ergänzen und die Ansprechtemperatur synergistisch herabgesetzt wird, während die nachteiligen Nebeneigenschaften, wie die genannte Kupferkorrosivität und der hohe Schmelzpunkt der Ausgangssubstanzen der Formeln (II) und (III), weitgehend verschwinden.

Die Verbindungen der Formel I, gegebenenfalls im Gemisch mit Verbindungen der Formeln II und/oder III, können auch in Hydraulikflüssigkeiten auf Basis von mineralischen und/oder synthetischen Oelen, die gegebenenfalls variable Mengen Wasser enthalten, wobei Oel-in-Wasser- oder Wasser-in- Oel-Emulsionen die geeigneten Anwendungsformen darstellen können, eingesetzt werden.

Die Schmierstoffe und Hydraulikflüssigkeiten können zusätzlich andere Additive enthalten, die zugegeben werden, um die Grundeigenschaften von Schmierstoffen oder Hydraulikflüssigkeiten noch weiter zu verbessern; dazu gehören: Antioxidantien, Metallpassivatoren, Rostinhibitoren, Viskositätsindex-Verbesserer, Stockpunkterniedriger, Dispergiermittel, Detergentien, weitere Hochdruck-Zusätze und Antiverschleiss-Additive. Im folgenden sind einige Beispiele von derartigen zusätzlichen Additiven aufgezählt:

Beispiele für phenolische Antioxidantien

1. Alkylierte Monophenole

2,6-Di-tert-butylphenol, 2,6-Di-tert-butyl-4-methylphenol, 2,6-Di-tert-butylphenol, 2-tert-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, o-tert-Butylphenol.

2. Alkylierte Hydrochinone

2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol.

3. Hydroxylierte Thiodiphenylether

2,2′-Thio-bis-(6-tert-butyl-4-methylphenol), 2,2′-Thio-bis-(4-octylphenol), 4,4′-Thio-bis-(6-tert-butyl-3-methylphenol), 4,4′-Thio-bis-(6-tert-butyl-2-methylphenol).

4. Alkyliden-Bisphenole

2,2′-Methylen-bis-(6-tert-butyl-4-methylphenol), 2,2′-Methylen-bis-(6-tert-butyl-4-ethylphenol), 2,2′-Methylen-bis[4-methyl-6-(α-methylcyclohexyl)-phenol], 2,2′-Methylen-bis-(4-methyl-6-cyclohexylphenol), 2,2′-Methylen-bis-(6-nonyl-4-methylphenol), 2,2′-Methylen-bis-(4,6-di-tert-butylphenol), 2,2′-Ethyliden-bis-(4,6-di-tert-butylphenol), 2,2′-Ethyliden-bis-(6-tert-butyl-4- oder -5-iso-butylphenol), 2,2′-Methylen-bis-[6-(α-methylbenzyl)-4-nonylphenol], 2,2′-Methylen-bis-[6-(α,α-dimethylbenzyl)-4-nonylphenol], 4,4′-Methylen-bis-(2,6-di-tert-butylphenol), 4,4′-Methylen-bis-(6-tert-butyl-2-methylphenol), 1,1-Bis-(5-tert-butyl-4-hydroxy-2-methylphenyl)-butan, 2,6-Di-(3-tert-butyl-5-methyl-2-hydroxybenzyl)-4-methylphenol, 1,1,3-Tris-(5-tert-butyl-4-hydroxy-2-methylphenyl)-3-n-dodecylmercaptobutan, Ethylenglycol-bis-[3,3-bis-(3′-tert-butyl-4′-hydroxyphenyl)-butyrat], Bis-(3-tert-butyl-4-hydroxy-5-methylphenyl)-dicyclopentadien, Bis-[2-(3′-tert-butyl-2′-hydroxy-5′-methylbenzyl)-6-tert-butyl-4-methyl-phenyl]-terephthalat.

5. Benzylverbindungen

1,3,5-Tri-(3,5-di-tert-butyl-4-hydroxybenzyl)-2,4,6-trimethylbenzol, Bis-(3,5-di-tert-butyl-4-hydroxybenzyl)-sulfid, 3,5-Di-tert-butyl-4-hydroxybenzyl-mercaptoessigsäure-isooctylester, Bis-(4-tert-butyl-3-hydroxy-2,6-dimethylbenzyl)-dithiol-terephthalat, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 3,5-Di-tert-butyl-4-hydroxybenzyl-phosphonsäure-dioctadecylester, 3,5-di-tert-butyl-4-hydroxybenzyl-phosphonsäure-monoethylester, Calcium-salz.

6. Acylaminophenole

4-Hydroxy-laurinsäureanilid, 4-Hydroxy-stearinsäureanilid, 2,4-Bis-octylmercapto-6-(3,5-di-tert-butyl-4-hydroxyanilino)-s-triazin, N-(3,5-di-tert-butyl-4-hydroxyphenyl)-carbaminsäureoctylester.

7. Ester der β-(3,5-Di-tert-butyl-4-hydroxyphenyl)-propionsäure mit ein- oder mehrwertigen Alkoholen, wie z.B. mit Methanol, Diethylenglycol, Octadecanol, Triethylenglycol, 1,6-Hexandiol, Pentaerythrit, Neopentylglycol, Tris-hydroxyethyl-isocyanurat, Thiodiethylenglycol, Bis-hydroxyethyl-oxalsäurediamid.

8. Ester der β-(5-tert-butyl-4-hydroxy-3-methylphenyl)-propion säure mit ein- oder mehrwertigen Alkoholen, wie z.B. mit Methanol, Diethylenglycol, Octadecanol, Triethylenglycol, 1,6-Hexandiol, Pentaerythrit, Neopentylglycol, Tris-hydroxyethyl-isocyanurat, Thiodiethylenglycol, Di-hydroxyethyl-oxalsäurediamid.

9. Amide der β-(3,5-Di-tert-butyl-4-hydroxyphenyl)-propionsäure, wie z.B. N,N′-Bis-(3,5-di-tert-butyl-4-hydroxyphenylpropionyl)-hexamethylendiamin, N,N′-Bis-(3,5-di-tert-butyl-4-hydroxyphenylpropionyl)-trimethylendiamin, N,N′-Bis-(3,5-di-tert-butyl-4-hydroxyphenylpropionyl)-hydrazin.

Beispiele für aminische Antioxidantien:
N,N′-Di-isopropyl-p-phenylendiamin, N,N′-Di-sec-butyl-p-phenylendiamin, N,N′-Bis(1,4-dimethyl-pentyl)-p-phenylendiamin, N,N′-Bis(1-ethyl-3-methyl-pentyl)-p-phenylendiamin, N,N′-Bis(1-methyl-heptyl)-p-phenylendiamin, N,N′-Dicyclohexyl-p-phenylendiamin, N,N′-Diphenyl-p-phenylendiamin, N,N′-Di-(naphthyl-2)-p-phenylendiamin, N-Isopropyl-N′-phenyl-p-phenylendiamin, N-(1,3-Dimethyl-butyl)-N′-phenyl-p-phenylendiamin, N-(1-Methyl-heptyl)-N′-phenyl-p-phenylendiamin, N-Cyclohexyl-N′-phenyl-p-phenylendiamin, 4-(p-Toluol-sulfonamido)-diphenylamin, N,N′-Dimethyl-N,N′-di-sec-butyl-p-phenylendiamin, Diphenylamin, N-Allyldiphenylamin, 4-Isopropoxy-diphenylamin, N-Phenyl-1-naphthylamin, N-Phenyl-2-naphthylamin, octyliertes Diphenylamin, z.B. p,p′-Di-tert-octyldiphenylamin, 4-n-Butylaminophenol, 4-Butyrylamino-phenol, 4-Nonanoylamino-phenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4′-Di-amino-diphenylmethan, 4,4′-Diamino-diphenylmethan, N,N,N′,N′-Tetramethyl-4,4′-diamino-diphenylmethan, 1,2-Di[(2-methyl-phenyl)-amino]-ethan, 1,2-Di-(phenylamino)-propan, (o-Tolyl)-biguanid, Di-[4-(1′,3′-dimethyl-butyl)-phenyl]amin, tert-octyliertes N-Phenyl-1-naphthylamin, Gemisch aus mono- und dialkylierten tert-Butyl-/tert-Octyldiphenylaminen, 2,3-Dihydro-3,3-dimethyl-4H-1,4-benzothiazin, Phenothiazin, N-Allylphenothiazin.

Beispiele für weitere Antioxidantien:
Aliphatische oder aromatische Phosphite, Ester der Thiodipropionsäure oder der Thiodiessigsäure, oder Salze der Dithiocarbamid- oder Dithiophosphorsäure.

Beispiele für Metall-Desaktivatoren, z.B. für Kupfer, sind:
Triazole, Benztriazole und deren Derivate, Tolutriazole und deren Derivate, 2-Mercaptobenzthiazol, 2-Mercaptobenztriazol, 2,5-Dimercaptobenztriazol, 2,5-Dimercaptobenzthiadiazol, 5,5′-Methylenbisbenztriazol, 4,5,6,7-Tetrahydrobenztriazol, Salicyliden-propylendiamin, Salicyl-aminoguanidin und dessen Salze.

Beispiele für Rost-Inhibitoren sind:

a) Organische Säuren, ihre Ester, Metallsalze und Anhydride, z.B.: N-Oleoyl-sarcosin, Sorbitan-monooleat, Blei-naphthenat, Alkenylbernsteinsäureanhydride, z.B. Dodecenylbernsteinsäure-anhydrid, Alkenylbernsteinsäure-Teilester und -Teilamide, 4-Nonylphenoxy-essigsäure.

b) Stickstoffhaltige Verbindungen, z.B.:

I. Primäre, sekundäre oder tertiäre aliphatische oder cycloaliphatische Amine und Amin-Salze von organischen und anorganischen Säuren, z.B. öllösliche Alkylammoniumcarboxylate.

II. Heterocyclische Verbindungen, z.B.:
Substituierte Imidazoline und Oxazoline.

c) Phosphorhaltige Verbindungen, z.B.:
Aminsalze von Phosphorsäurepartialestern oder Phosphonsäurepartialestern, Zinkdialkyldithiophosphate.

d) Schwefelhaltige Verbindungen, z.B.:
Barium-dinonylnaphthalin-sulfonate, Calciumpetroleum-sulfonate.

Beispiele für Viskositätsindex-Verbesserer sind:
Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

Beispiele für Stockpunkterniedriger sind:
Polymethacrylat, alkylierte Naphthalinderivate.

Beispiele für Dispergiermittel/Tenside sind:
Polybutenylbernsteinsäureamide oder -imide, Polybutenylphosphonsäurederivate, basische Magnesium-, Calcium-, und Bariumsulfonate und -phenolate.

Beispiele für Verschleissschutz-Additive sind:
Schwefel und/oder Phosphor und/oder Halogen enthaltende Verbindungen, wie geschwefelte pflanzliche Oele, Zinkdialkyldithiophosphate, Tritolylphosphat, chlorierte Paraffine, Alkyl- und Aryldi- und tri-sulfide, Triphenylphosphorothionate, Diethanolaminomethyltolyltriazol, Di(2-ethylhexyl)aminomethyltolyltriazol.

Schmierstoffzusammensetzungen enthaltend die erfindungsgemässen Verbindungen können auch ein Co-Schmiersystem, beispielsweise aus den üblichen Mengen eines Festschmierstoffes aus der Reihe Graphit, Molybdändisulfid, Bornitrid oder Polytetrafluorethylen (PTFE) enthalten.

Die vorliegende Erfindung betrifft demnach auch die Verwendung von Verbindungen der Formel (I) als Additive für Schmierstoffe und Hydraulikflüssigkeiten und zweckmässig die Verwendung der Mischungen der Verbindungen der Formel (II) und (III) und den daraus entstehenden Reaktionsprodukten der Formel (I), als Additive für Schmierstoffe oder Hydraulikflüssigkeiten, wobei molare Mischungsverhältnisse von 3:1 bis 1:3, zweckmässig von 3:2 bis 2:3 und bevorzugt von 5:4 bis 4:5, für die Verbindungen der Formel (II) zu Verbindungen der Formel (III), gewählt werden können.

Auf Grund der vorstehend angegebenen Verwendungsmöglichkeiten der erfindungsgemässen Verbindungen der Formel (I) betrifft die Erfindung auch die Verwendung von Zusammensetzungen, die einen Schmierstoff oder eine Hydraulikflüssigkeit und mindestens eine Verbindung der Formel (I) enthalten oder die Mischungen der Verbindungen nach Formel (II) und (III), sowie die daraus entstehenden Reaktionsprodukte in Form von Verbindungen der Formel (I) enthalten. Beispiele für Art und Zusammensetzung solcher flüssigkeiten sind weiter oben angegeben.

Schliesslich umfasst vorliegende Erfindung die neuen Verbindungen der Formel

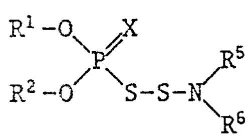

(I),

worin
$R^1$ und $R^2$ gleich oder verschieden sind und jeweils eine Alkylgruppe mit 1 bis 30 C-Atomen, eine unsubstituierte oder $C_1$-$C_8$ alkylsubstituierte Cycloalkylgruppe mit 5 bis 12 C-Atomen oder eine unsubstituierte oder $C_1$-$C_{12}$ alkylsubstituierte $C_6$-$C_{10}$-Arylgruppe darstellen oder $R^1$ und $R^2$ zusammen eine unsubstituierte oder $C_1$-$C_{12}$ alkylsubstituierte Alkylengruppe mit 2 bis 20 C-Atomen oder eine Arylengruppe mit 6 bis 20 C-Atomen darstellen und
$R^5$ und $R^6$ gleich oder verschieden sind und jeweils eine Alkylgruppe mit 1 bis 30 C-Atomen oder
$R^5$ und $R^6$ zusammen eine unsubstituierte oder $C_1$-$C_{12}$ alkylsubstituierte Alkylengruppe mit 2 bis 20 C-Atomen oder eine durch -O-, -S- oder -$NR^9$-, wobei $R^9$ H oder $C_1$-$C_4$-Alkyl bedeutet, unterbrochene Alkylengruppe mit 2 bis 10 C-Atomen und
X = O oder S darstellt, mit der Massgabe, dass Verbindungen, in denen $R^1$ und $R^2$ gleich sind und eine Alkylgruppe mit 2, 3 oder 4 C-Atomen sind und $R^5$ und $R^6$ gleich sind und eine Alkylgruppe mit 2, 3 oder 4 C-Atomen oder $R^5$ und $R^6$ zusammen $-CH_2-CH_2-O-CH_2-CH_2-$ oder $-(CH_2)_5-$ darstellen, ausgeschlossen sind.

Zu den zweckmässigen Verbindungen gehören solche mit der allgemeinen Formel (I), worin $R^1$ und $R^2$ jeweils eine Cyclohexyl-, Phenyl-, p-Methylphenyl- oder 2-Ethylhexyl-Gruppe oder $R^1$ und $R^2$ zusammen eine 1-Isopropyl-2,2-dimethyl-trimethylen-, eine 2,2-Dimethyl-trimethylen-, eine 2-Methyl-2-n-propyl-trimethylen- oder eine 2-Methyl-2-n-butyltrimethylen-Gruppe darstellen und $R^5$ und $R^6$ jeweils eine 2-Ethyl-hexyl-Gruppe oder $R^5$ und $R^6$ zusammen mit dem sie verbindenden N-Atom eine Morpholinogruppe darstellen.

Zu den bevorzugten Verbindungen der Formel I gehören:

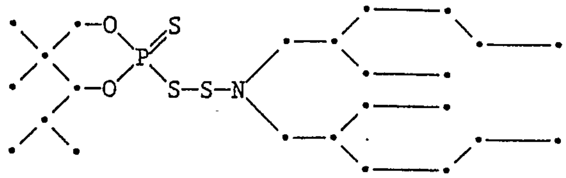

,

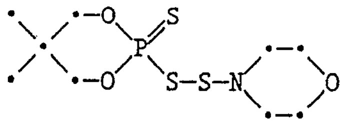

,

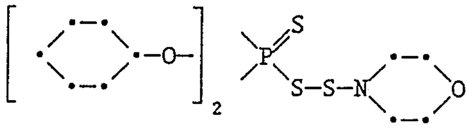

,

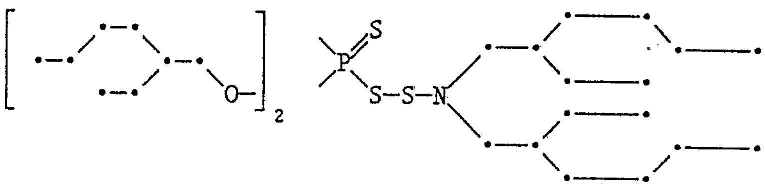

,

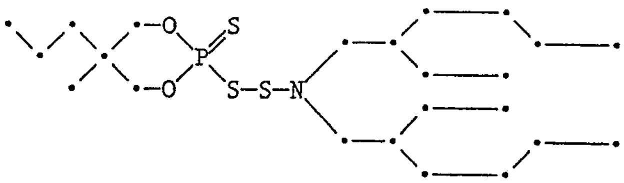

,

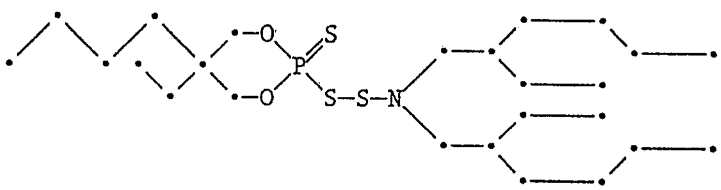

,

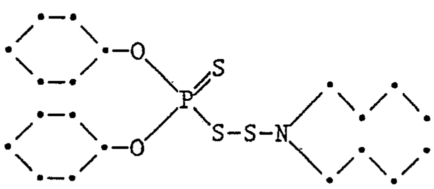

,

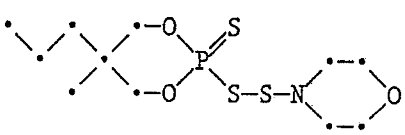

,

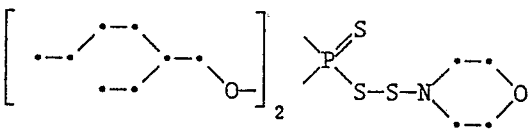

,

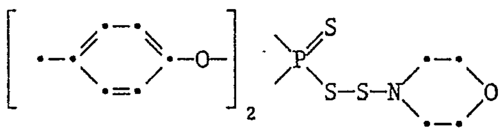

,

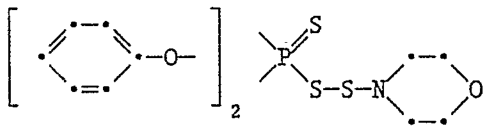

und

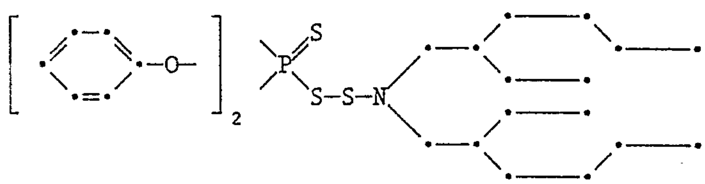

.

Weitere erfindungsgemäss bevorzugte Verbindungsgruppen und Verbindungen der Formel (I) sind den oben angegebenen bevorzugten Zusammensetzungen zu entnehmen.

Die nachfolgenden Beispiele erläutern die Erfindung weiter. Prozent und Teile beziehen sich darin, ebenso wie in der übrigen Beschreibung und in den Patentansprüchen, auf das Gewicht, wenn nichts anderes angegeben ist.

Herstellungsbeispiel 1

92 Teile Bis-(di-2-ethylhexylamino)-disulfid werden bei -20°C in 600 Teilen Methylenchlorid mit 27 Teilen Brom versetzt. Nach einer Stunde werden 94 Teile Kalium-1,3-dioxa-4-isopropyl-5,5-dimethyl-2-phosphorinan-2-thion-2-thiolat, suspendiert in 500 Teilen Methylenchlorid, zugesetzt. Das Gemisch wird eine Stunde bei -20°C gerührt, danach auf Raumtemperatur erwärmt und weiter 2 Stunden gerührt und mit 400 Teilen Wasser versetzt. Die organische Phase wird mit Natriumbicarbonatlösung und mit Wasser gewaschen, über Magnesiumsulfat getrocknet und eingedampft. Man erhält 162 Teile eines gelben Oeles, welches aus zwei Komponenten besteht. Durch Säulenchromatographie an Kieselgel (Eluiermittel: Cyclohexan/Toluol 3:1) werden 124 Teile reines Produkt isoliert, dem aufgrund seines $^{31}P$-NMR-Signals bei 87,8 ppm folgende Struktur zugeordnet werden kann:

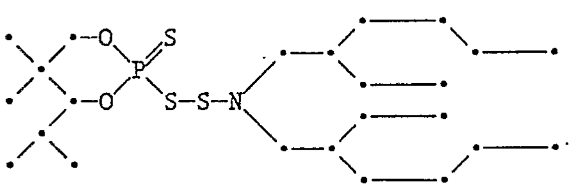

Oel,

$n_D^{20} = 1,5198$

| | | C | H | N | S |
|---|---|---|---|---|---|
| Analyse: | berechnet | 56,32 | 9,85 | 2,74 | 18,79 |
| | gefunden | 56,54 | 9,84 | 2,74 | 19,07 |

Herstellungsbeispiel 2

Folgendes Beispiel ist aufgrund der gut interpretierbaren NMR-Spektren und der guten dünnschichtchromatographischen Trennung aller an der Reaktion beteiligten Substanzen besonders gut zur Illustration dieser Herstellungsmethode geeignet:

5 Teile Bis-(1,3-dioxa-5,5-dimethyl-2-thion-2-phosphorinyl)-disulfid und 3 Teile Bis-morpholino-disulfid werden

in 370 Teilen Toluol gelöst und unter Stickstoff zum Rückfluss erhitzt. Nach 10 Stunden ist die Umsetzung der Edukte bereits vollständig; das Reaktionsgemisch wird noch weitere 6 Stunden zum Rückfluss erhitzt, dann eingedampft und ohne jegliche Reinigung NMR-spektroskopisch untersucht.

Das Rohprodukt aus diesem Herstellungsbeispiel enthält demnach rund 84 % der gewünschten Verbindung der Formel:

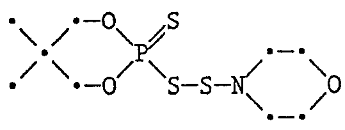

Smp. 96-99°C

| | | C | H | N | S |
|---|---|---|---|---|---|
| Analyse: | berechnet | 34,27 | 5,75 | 4,44 | 30,49 |
| | gefunden | 34,39 | 5,80 | 4,32 | 30,65 |

Dieses Resultat bestätigt sich bei der Dünnschichtchromatographie (Kieselgel; Toluol/Essigester 19:1).

Analog Beispiel 1 oder Beispiel 2 werden hergestellt:

| | | |
|---|---|---|
| 3 | 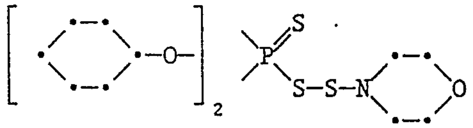 | Smp. 58-60° |
| 4 | 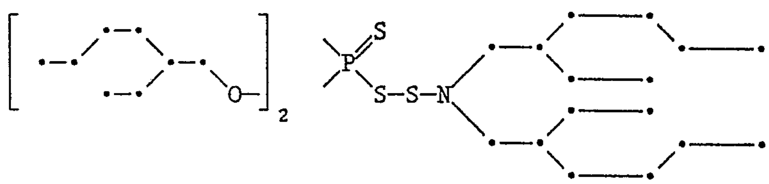 | Oel, $n_D^{20}$ = 1,4978 |
| 5 | 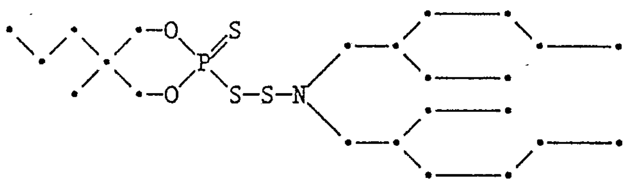 | Oel, $n_D^{20}$ = 1,5520 |
| 6 | 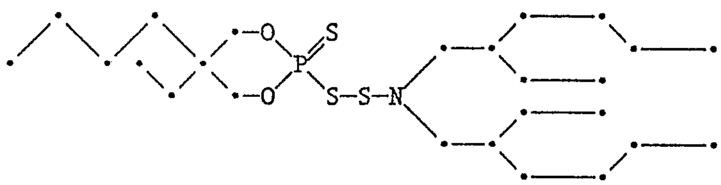 | Oel, $n_D^{20}$ = 1,5196 |
| 7 | 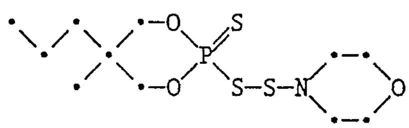 | Smp. = 67-74° (Isomeren-gemisch) |
| 8 | 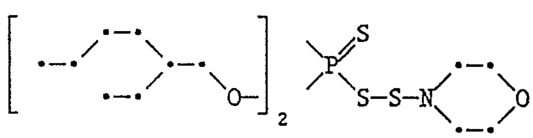 | teilweise kristallisiert |
| 9 | 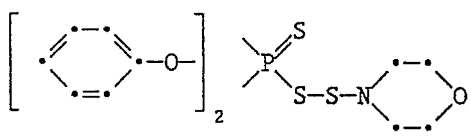 | Harz |

Anwendungsbeispiel 10

In diesem Beispiel wird die Temperatur bestimmt, bei welcher die untersuchten Substanzen ihre maximale Zersetzungsrate erreichen (DTG-Spitze); letzere ist ein gutes Mass für die Fähigkeit eines Moleküls, im Schmieröl sich im richtigen Augenblick zu zersetzen und auf dem zu schützenden Metall eine verschleissverhindernde Reaktionsschicht zu bilden. Die Bestimmung der Zersetzungstemperatur erfolgt durch Thermogravimetrie mit einer konstanten Aufheizrate von 5° pro Minute; erfahrungsgemäss sind dabei Werte zwischen 150° und 220° C für die meisten Applikationen optimal. Die Resultate sind mit denjenigen des Beispiels 11 in derselben Tabelle zusammengefasst.

Anwendungsbeispiel 11

Die Korrosivität gegenüber Kupfer wird nach ASTM-Standardmethode D 130 bestimmt (3 Stunden bei 120° C); wiedergegeben sind in der Tabelle die Resultate von 1%igen Lösungen der erfindungsgemässen Produkte in einem Grundöl (Catenex P 941® der Shell) und 0,03 % eines handelsüblichen Kupferpassivators des Typs 1-(Di-2-ethylhexyl)-aminomethyltolutriazol.

Die Beurteilung geschieht in 4 Stufen:

1 - kein Beschlag
2 - mässiger Beschlag
3 - starker Beschlag
4 - Korrosion

B stellt eine Feinunterteilung innerhalb der Zahlengruppen 1 bis 4 dar und bedeutet die Schattenbildung auf den Proben. In der qualitativen Beurteilung A bis E steht die Wertung A vor B, B vor C usw.

Weiters erfolgt der Test auf Verschleissschutz. Zur Prüfung auf Eignung als Verschleissschutzadditiv wird die ASTM-Standardmethode D-2783-81 unter Verwendung des Shell-Vierkugelapparates (VKA) herangezogen. Als Basisöl wird Catenex®P941 der Fa. Shell verwendet. Ermittelt werden

a) die Schweisslast WL (Weld Load) als die Last (in kg), bei der die 4 Kugeln innerhalb von 10 sec. zusammenschweissen, und

b) der mittere Verschleiss-Narben-Durchmesser (Wear Scar Diameter, WSD) bei einer Last von 40 kg während 1 Std. (in mm).

Die Ergebnisse dieser Tests sind in der nachfolgenden Tabelle zusammengefasst.

Tabelle

| Additiv | DTG-Spitze | Kupfer-Korrosion D 130 | VKA | |
|---|---|---|---|---|
| | | | WL | WSD |
| - | | 1B | 1450 | 0,90 |
| Beispiel 1 | 201 | 1B | 2000 | 0,50 |
| Beispiel 3 | 209 | 1B | 2200 | 0,50 |

**Patentansprüche**

1. Schmierstoffzusammensetzungen oder Hydraulikflüssigkeitszusammensetzungen enthaltend
a) mindestens einen Schmierstoff oder eine Hydraulikflüssigkeit und
b) mindestens eine Verbindung der Formel

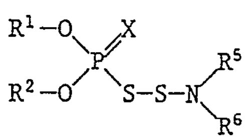

(I),

worin

$R^1$ und $R^2$ gleich oder verschieden sind und jeweils eine Alkylgruppe mit 1 bis 30 C-Atomen, eine unsubstituierte oder $C_1$-$C_8$ alkylsubstituierte Cycloalkylgruppe mit 5 bis 12 C-Atomen oder eine unsubstituierte oder $C_1$-$C_{12}$ alkylsubstituierte $C_6$-$C_{10}$-Arylgruppe darstellen oder $R^1$ und $R^2$ zusammen eine unsubstituierte oder $C_1$-$C_{12}$ alkylsubstituierte Alkylengruppe mit 2 bis 20 C-Atomen oder eine Arylengruppe mit 6 bis 20 C-Atomen darstellen und

$R^5$ und $R^6$ gleich oder verschieden sind und jeweils eine Alkylgruppe mit 1 bis 30 C-Atomen oder $R^5$ und $R^6$ zusammen eine unsubstituierte oder $C_1$-$C_{12}$ alkylsubstituierte Alkylengruppe mit 2 bis 20 C-Atomen, eine durch -O-, -S- oder -$NR^9$-, wobei $R^9$ H oder $C_1$-$C_4$-Alkyl bedeutet, unterbrochene Alkylengruppe mit 2 bis 10 C-Atomen und

X = O oder S darstellen.

2. Zusammensetzung nach Anspruch 1, enthaltend mindestens eine Verbindung der Formel (I) gebildet in situ im Schmierstoff oder in der Hydraulikflüssigkeit als Umsetzungsprodukt aus wenigstens einer Verbindung der Formel

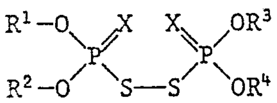 (II),

wobei $R^1$ und $R^2$ die in Anspruch 1 angegebene Bedeutung haben und $R^3$ und $R^4$ gleich oder verschieden sind und die für $R^1$ oder $R^2$ in Anspruch 1 angegebene Bedeutung haben oder $R^3$ und $R^4$ zusammen die für $R^1$ und $R^2$ zusammen in Anspruch 1 angegebene Bedeutung haben und wenigstens einer Verbindung der Formel

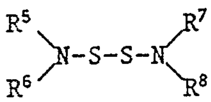 (III),

wobei $R^5$ und $R^6$ die in Anspruch 1 angegebene Bedeutung haben und $R^7$ und $R^8$ gleich oder verschieden sind und die gleiche Bedeutung wie $R^5$ und $R^6$ haben oder $R^7$ und $R^8$ zusammen die für $R^5$ und $R^6$ zusammen in Anspruch 1 angegebene Bedeutung haben.

3. Zusammensetzung nach Anspruch 2, dadurch gekennzeichnet, dass in den Verbindungen nach Formel (II) jeweils die Substituenten $R^1$ und $R^2$ gleich sind und $R^3$ und $R^4$ gleich sind oder die Substituenten $R^1$, $R^2$, $R^3$ und $R^4$ gleich sind.

4. Zusammensetzung nach Anspruch 2, dadurch gekennzeichnet, dass in den Verbindungen nach Formel (III) jeweils die Substituenten $R^5$ und $R^6$ gleich sind und $R^7$ und $R^8$ gleich sind oder die Substituenten $R^5$, $R^6$, $R^7$ und $R^8$ gleich sind.

5. Zusammensetzung nach Anspruch 1 oder 2, dadurch gekennzeichnet, dass in den Verbindungen der Formeln (I) oder (II) die Substituenten $R^1$ und $R^2$ gleich sind und eine Alkylgruppe mit 5 bis 12 C-Atomen, Phenyl, eine $C_1$-$C_8$ alkylsubstituierte Phenylgruppe oder eine unsbustituierte oder $C_1$-$C_4$ alkylsubstituierte Cycloalkylgruppe mit 6-8 C-Atomen bedeuten oder dass $R^1$ und $R^2$ zusammen eine verzweigte Alkylengruppe mit 4-9 C-Atomen bedeutet.

6. Zusammensetzung nach Anspruch 1 oder 2, dadurch gekennzeichnet, dass in den Verbindungen der Formeln (I) und (III) die Substituenten $R^5$ und $R^6$ gleich sind und eine Alkylgruppe mit 5-12 C-Atomen oder $R^5$ und $R^6$ zusammen eine Alkylengruppe mit 4 bis 6 C-Atomen oder eine durch -O-unterbrochene Alkylengruppe mit 4 bis 6 C-Atomen darstellen.

7. Zusammensetzung nach Anspruch 1 oder 2, dadurch gekennzeichnet, dass die Substituenten $R^5$ und $R^6$ in den Formeln (I) und (III) zusammen mit dem sie verbindenden N-Atom eine Morpholinogruppe oder $R^5$ und $R^6$ jeweils eine 2-Ethyl-hexylgruppe darstellen.

8. Zusammensetzung nach Anspruch 1 oder 2, dadurch gekennzeichnet, dass in den Formeln (I) und (II) X = S bedeutet.

9. Zusammensetzung nach Anspruch 1 enthaltend wenigstens eine Verbindung der Formel (I) in einer Konzentration von 0,01 bis 10 Gew.-%, bezogen auf die gesamte Zusammensetzung.

10. Zusammensetzung nach Anspruch 2, enthaltend die Verbindungen der Formel (I) und die verbleibenden Verbindungen der Formeln (II) und/oder (III), wenn die Verbindungen der Formel (II) und (III) in molaren Mischungsverhältnissen von 3:1 bis 1:3 angewendet werden.

11. Verfahren zur Herstellung einer Zusammensetzung gemäss Anspruch 1, dadurch gekennzeichnet, dass man Verbindungen der Formel (II) und der Formel (III) gemäss Anspruch 2 mischt und die gebildete Verbindung der Formel I einem Schmierstoff oder einer Hydraulikflüssigkeit zumischt.

12. Verfahren zur Herstellung einer Zusammensetzung gemäss Anspruch 2, dadurch gekennzeichnet, dass man dem Schmierstoff oder der Hydraulikflüssigkeit mindestens eine Verbindung der Formel (II) und mindestens einer Verbindung der Formel (III) zugibt und alle Komponenten mischt.

13. Verfahren nach Anspruch 11 oder 12, dadurch gekennzeichnet, dass die Verbindungen nach Formel II und die Verbindungen nach Formel III in äquimolaren Mengen angewendet werden.

14. Verfahren nach Anspruch 11 oder 12, dadurch gekennzeichnet, dass man als Verbindung der Formel

(II) eine solche der Formel

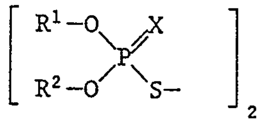

(IV),

wobei $R^1$, $R^2$ und X die in Anspruch 1 angegebene Bedeutung haben und als Verbindung der Formel (III) eine solche der Formel

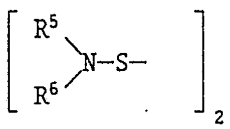

(V),

wobei $R^5$ und $R^6$ die in Anspruch 1 angegebene Bedeutung haben, einsetzt.

15. Verfahren nach Anspruch 12, dadurch gekennzeichnet, dass man wenigstens eine Verbindung der Formel (II) und wenigstens eine Verbindung der Formel (III) mit dem Schmierstoff oder der Hydraulikflüssigkeit so vermischt, dass die Summe der Verbindungen der Formeln (II) und (III) und der daraus gebildeten Verbindungen der Formel (I) 0,01 bis 99 Gew.-%, bezogen auf die Zusammensetzung, beträgt.

16. Verfahren nach Anspruch 12, dadurch gekennzeichnet, dass die Verbindungen der Formel (II) und der Formel (III) in einem Schmierstoff oder einer Hydraulikflüssigkeit in einer Konzentration von zusammen 0,01 bis 10 Gew.-%, bezogen auf die Zusammensetzung, zugemischt werden.

17. Verfahren nach Anspruch 11 oder 12, dadurch gekennzeichnet, dass die Mischungen, enthaltend die Verbindungen der Formel II und der Formel III, einer Temperatur von 25 bis 150° C, ausgesetzt werden.

18. Verwendung von Verbindungen der Formel (I) gemäss Anspruch 1 als Schmierstoff-Additive oder Additive in Hydraulikflüssigkeiten.

19. Verwendung der Mischungen von Verbindungen der Formel (II) nach Anspruch 2 und der Formel (III) nach Anspruch 2 und deren Reaktionsprodukte mit der Formel (I) nach Anspruch 1, wobei molare Mischungsverhältnisse von 3:1 bis 1:3, von Verbindungen der Formel (II) zu Verbindungen der Formel (III) angewendet werden, als Additive für Schmierstoffe und Hydraulikflüssigkeiten.

20. Verbindungen der Formel

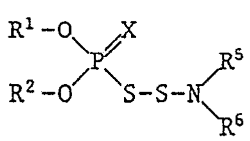

(I),

worin
$R^1$ und $R^2$ gleich oder verschieden sind und jeweils eine Alkylgruppe mit 1 bis 30 C-Atomen, eine unsubstituierte oder $C_1$-$C_8$ alkylsubstituierte Cycloalkylgruppe mit 5 bis 12 C-Atomen oder eine unsubstituierte oder $C_1$-$C_{12}$ alkylsubstituierte $C_6$-$C_{10}$-Arylgruppe darstellen oder $R^1$ und $R^2$ zusammen eine unsubstituierte oder $C_1$-$C_{12}$ alkylsubstituierte Alkylengruppe mit 2 bis 20 C-Atomen oder eine Arylengruppe mit 6 bis 20 C-Atomen darstellen und $R^5$ und $R^6$ gleich oder verschieden sind und eine Alkylgruppe mit 1 bis 30 C-Atomen darstellen oder $R^5$ und $R^6$ zusammen eine unsubstituierte oder $C_1$-$C_{12}$ alkylsubstituierte Alkylengruppe mit 2 bis 20 C-Atomen oder eine durch -O-, -S- oder -$NR^9$-, wobei $R^9$ H oder $C_1$-$C_4$-Alkyl bedeutet, unterbrochene Alkylengruppe mit 2 bis 10 C-Atomen und X=O oder S darstellen, mit der Massgabe, dass Verbindungen in denen $R^1$ und $R^2$ gleich sind und eine Alkylgruppe mit 2, 3 oder 4 C-Atomen sind und $R^5$ und $R^6$ gleich sind und eine Alkylgruppe mit 2, 3 oder 4 C-Atomen oder $R^5$ und $R^6$ zusammen $-CH_2-CH_2-O-CH_2-CH_2-$ oder $-(CH_2)_5-$ darstellen, ausgeschlossen sind.

21. Verbindungen der Formeln

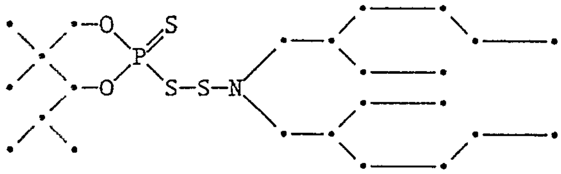

,

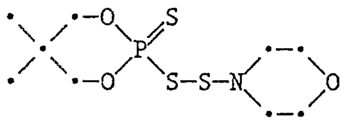

,

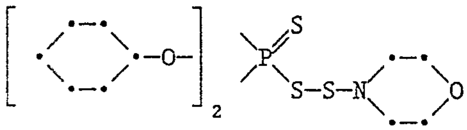

,

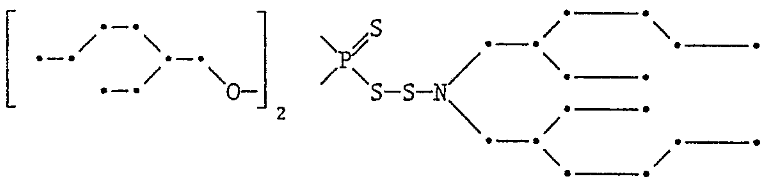

,

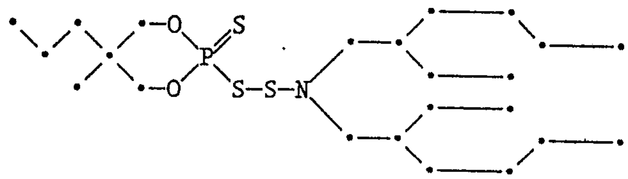

,

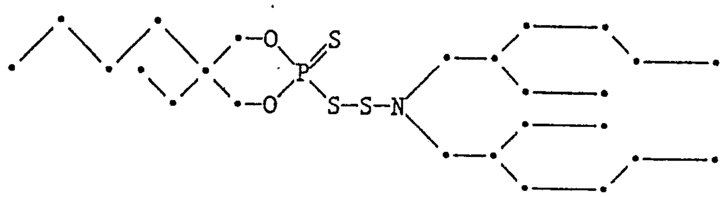

,

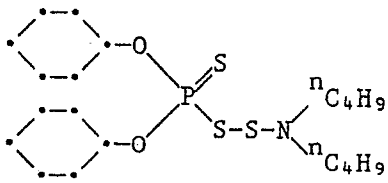

,

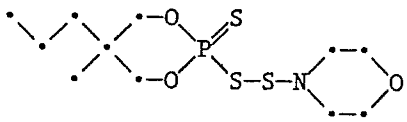

,

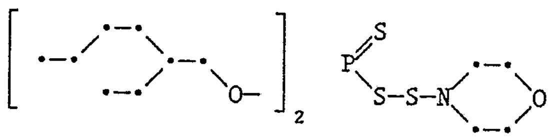

,

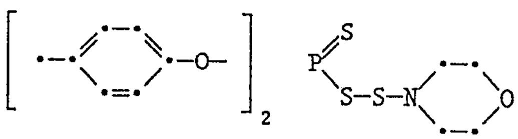

,

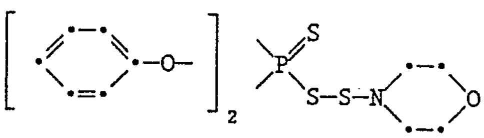

und

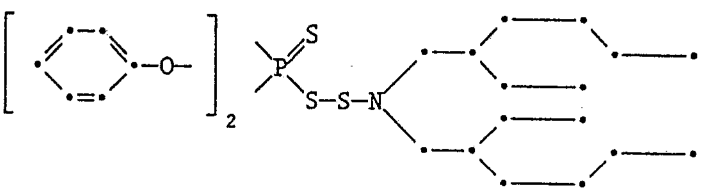

.